# EUROPEAN PATENT APPLICATION

(11) **EP 4 666 866 A1**
(43) Date of publication of application: **24.12.2025**
(21) Application number: 24756774.6
(22) Date of filing: 07.02.2024
(51) Int. Cl.: A23L 2/38, A23L 2/00, A23L 2/52

(54) **ACETIC ACID BACTERIA-CONTAINING BEVERAGE AND METHOD FOR PRODUCING SAME**

(30) Priority: 13.02.2023 JP 2023020067
(71) Applicant: Kewpie Corporation, Tokyo 150-0002 (JP)
(72) Inventor: KAJIYAMA Daichi, Chofu-shi, Tokyo 182-0002 (JP); OKUYAMA Yohei, Chofu-shi, Tokyo 182-0002 (JP)
(74) Representative: AWA Sweden AB
(86) International application number: PCT/JP2024/004103
(87) International publication number: WO 2024/171926

(57) **Abstract**

An object of the present invention is to provide an acetic acid bacteria-containing beverage which has a fruit flavor that lasts in the mouth despite having a low viscosity. The beverage according to the present invention is a beverage containing at least a polysaccharide and dried acetic acid bacteria, and having a viscosity at 25°C of 50 mPa·s or less, wherein the acetic acid bacteria in the beverage have a volume average particle size of 0.10 µm or more and less than 0.50 µm.

## Description

### BACKGROUND OF THE INVENTION

### Field of the Invention

The present invention relates to an acetic acid bacteria-containing beverage. The present invention also relates to a method of producing the acetic acid bacteria-containing beverage.

### Background Art

Acetic acid bacteria are one type of useful microorganisms to be used in the fermentation production of vinegar, and vinegar immediately after the fermentation production contains acetic acid bacteria. However, since it is common for commercially available vinegars to have a clear appearance without containing acetic acid bacteria, acetic acid bacteria are removed by filtration in most of the commercially available vinegars. Commercially available vinegars that contain acetic acid bacteria may be, for example, vinegars produced by traditional methods without microfiltration. Specifically, some of black vinegars and balsamic vinegars contain acetic acid bacteria.

A black vinegar containing acetic acid bacteria or a balsamic vinegar containing acetic acid bacteria is consumed by being mixed with another beverage such as water, in a state of a vinegar obtained by the fermentation production as it is. Therefore, it cannot be said that acetic acid bacteria have been sufficiently utilized in such a manner that, for example, subjecting acetic acid bacterial cells themselves to processing treatments such as drying treatment and homogenization treatment in combination, to change the particle size or the like of the acetic acid bacterial cells to a specific form, and incorporating the bacterial cells into a beverage.

Beverages are ingested for a wide range of purposes and uses, for example, as a method of ingesting a specific nutrient or the like, or as a method of changing mood, such as for refreshing. Beverages desirably have a delicious flavor that makes people want to ingest them. The flavor of a beverage is first detected by the sense of smell by the nose, before putting the beverage into the mouth, as the aromas of aromatic components such as furals, alcohols and aldehydes. Next, after putting the beverage into the mouth, citric acid, minerals and the like are detected by the sense of taste by the tongue in the mouth, and at the same time, the aromas of the aromatic components are detected by the sense of smell through the pathway from the oral cavity to the olfactory bulb.

Among beverage flavors, fruit flavors such as the flavors of plum and apple have always been popular, in recent years. However, it is difficult to allow the flavor of a fruit-flavored beverage to last in the mouth, and a further improvement measure is desired, despite having the techniques of adding various flavoring agents and the like. To enhance the richness of the taste and the lasting feeling of the taste of a beverage, for example, it has been proposed to adjust the content of a specific aroma component in the beverage (see, Patent Document 1). However, adjusting the content of an aroma component in a beverage results in complicated operations in the production process, and has been a cause that leads to an increase in the production cost. Therefore, an improvement measure such as improving the taste of a beverage has still been highly desired.

### Citation List

### Patent Documents

Patent Document 1: JP 2022-018235 A

### SUMMARY OF THE INVENTION

### Technical Problem

In recent years, beverages with a refreshing taste are often required to have smooth physical properties. However, decreasing the viscosity of a beverage in order to obtain smooth physical properties, has led to a problem that the flavor of the beverage does not last in the mouth. For example, there has been a problem that a fruit flavor does not last in the mouth and disappears right away, leaving an unsatisfactory feeling.

### Solution to Problem

As a result of intensive studies to solve the problem as described above, the present inventors have found out that the above-described problem can be solved, by incorporating a polysaccharide and acetic acid bacteria into a beverage, and by adjusting the viscosity of the beverage and the volume average particle size of the acetic acid bacteria in the beverage. The adjustment of the volume average particle size of the acetic acid bacteria, which is one of the technical features of the present invention, will now be described.

Live acetic acid bacterial cells obtained from fermented foods such as vinegar generally have a volume average particle size of from 1 to 2 µm, and acetic acid bacteria to be used in fermented foods are derived from those collected from nature, such as flowers and fruits. In cases where acetic acid bacteria obtained from a fermented food are subjected to a refining treatment such as one using a high-pressure homogenizer and then incorporated into a beverage, the volume average particle size of the acetic acid bacteria does not change from that of the original acetic acid bacteria. Further, in cases where acetic acid bacteria obtained from a fermented food are subjected to a drying treatment and then incorporated into a beverage, the dried acetic acid bacteria regain a water-containing state, and restore the same volume average particle size as that of the original acetic acid bacteria. The "average particle diameter of the original acetic acid bacteria" as used herein refers to the "volume average particle size of live acetic acid bacterial cells" when a food or the like is being fermented and producing acetic acid and the like.

In contrast, the present inventors have found out that it is possible to shrink the volume average particle size of acetic acid bacteria to a specific particle size, by subjecting acetic acid bacteria obtained from a fermented food to a drying treatment and a refining treatment in combination. It is thought that the structure of the membrane of acetic acid bacteria is modified by carrying out a refining treatment after a drying treatment, making it possible to shrink the volume average particle size of the acetic acid bacteria to a specific particle size without restoring the volume average particle size of the original acetic acid bacteria, even if the dried acetic acid bacteria are allowed to absorb water again. In order to obtain the effect of allowing the fruit flavor to last in the mouth, in a low-viscosity beverage, the present inventors have discovered a new finding related to the adjustment of the volume average particle size of acetic acid bacteria, and have completed a beverage in which the above-described finding is one of the technical features.

Specifically, the present invention provides the following inventions.
[1] A beverage containing at least a polysaccharide and dried acetic acid bacteria, and having a viscosity at 25°C of 50 mPa·s or less,
   wherein the acetic acid bacteria in the beverage have a volume average particle size of 0.10 µm or more and less than 0.50 µm.
[2] The beverage according to [1], wherein the polysaccharide is at least one selected from the group consisting of soybean polysaccharide and pectin.
[3] The beverage according to [1], wherein the polysaccharide is soybean polysaccharide.
[4] The beverage according to any one of [1] to [3], wherein the beverage has a viscosity at 25°C of 0.1 mPa·s or more.
[5] The beverage according to any one of [1] to [4], wherein the beverage has a viscosity at 25°C of 10 mPa·s or less.
[6] The beverage according to any one of [1] to [5], wherein the amount of the dried acetic acid bacteria incorporated into the beverage is 0.001% by mass or more and 1% by mass or less, with respect to the total amount of the beverage.
[7] The beverage according to any one of [1] to [6], wherein the beverage has a pH of 4.0 or less.
[8] The beverage according to any one of [1] to [7], wherein the beverage further contains a vinegar.
[9] The beverage according to [8], wherein the acidity of acetic acid in the beverage is 0.05% by mass or more and 1% by mass or less.
[10] The beverage according to any one of [1] to [9], wherein the beverage is a fruit-flavored beverage.
[11] A method of producing a beverage having a viscosity at 25°C of 50 mPa·s or less, the method including the steps of:
   mixing at least dried acetic acid bacteria and a polysaccharide to obtain a mixed liquid; and
   subjecting the mixed liquid obtained in the mixing step to a refining treatment;
   wherein the acetic acid bacteria in the beverage have a volume average particle size of 0.1 µm or more and less than 0.5 µm.
[12] The method of producing a beverage according to [11], wherein the polysaccharide is soybean polysaccharide.
[13] The method of producing a beverage according to [11] or [12], wherein the beverage has a viscosity at 25°C of 0.1 mPa·s or more.
[14] The method of producing a beverage according to any one of [11] to [13], wherein the beverage has a viscosity at 25°C of 10 mPa·s or less.
[15] The method of producing a beverage according to any one of [11] to [14], wherein the amount of the dried acetic acid bacteria incorporated into the beverage is 0.001% by mass or more and 1% by mass or less, with respect to the total amount of the beverage.

### Effect of the Invention

According to the present invention, it is possible to provide an acetic acid bacteria-containing beverage which has a fruit flavor that lasts in the mouth despite having a low viscosity. Such an acetic acid bacteria-containing beverage enables the stimulation of the appetite of consumers, making it possible to expect a further expansion in the market of acetic acid bacteria-containing beverages.

### DETAILED DESCRIPTION OF THE INVENTION

### < Beverage >

The beverage according to the present invention contains at least a polysaccharide and dried acetic acid bacteria, and may further contain a vinegar and another raw material.

### (Fruit Flavor)

The beverage according to the present invention includes: a beverage that mainly has a fruit flavor; and a beverage that has a fruit flavor as a part of the entire flavor of the beverage, such as a flavored tea, or the like. In either way, the beverage according to the present invention refers to a beverage that has a fruit flavor that lasts in the mouth. Since the beverage according to the present invention has a fruit flavor that can last in the mouth, the beverage is preferably a fruit-flavored beverage.

The type of fruit to be used for obtaining the fruit flavor which is the effect of the present invention is not particularly limited. However, specific examples thereof include fruits belonging to the family *Rosaceae,* such as plums, apples, apricots, strawberries, cherries, plums, pears, loquats, prunes and quinces; and fruits belonging to the family *Rutaceae,* such as oranges, mandarin oranges, lemons and grapefruits. The beverage according to the present invention is preferably a beverage having a flavor of a fruit belonging to the family *Rosaceae.*

### (Viscosity)

The beverage according to the present invention has a viscosity at 25°C of 50 mPa·s or less, preferably 30 mPa·s or less, more preferably 20 mPa·s or less, still more preferably 10 mPa·s or less, yet still more preferably 0.1 mPa·s or more, yet still more preferably 0.5 mPa·s or more, and yet still more preferably 1 mPa·s or more. When the viscosity of the beverage is within the numerical range described above, it is possible to impart smooth physical properties to the beverage.

The value of the viscosity of the beverage is a value determined by performing measurement using a Type B viscosimeter under the conditions of a product temperature of 25°C and a rotational speed of 60 rpm, with the use of an L-shaped adaptor, and calculating from the reading when the rotor has rotated for two minutes after the start of the measurement.

### (pH)

The beverage according to the present invention preferably has a pH of 4.0 or less, more preferably 3.8 or less, still more preferably 3.5 or less, and yet still more preferably 3.3 or less, and at the same time, preferably 2.0 or more, more preferably 2.5 or more, and still more preferably 2.7 or more. When the pH of the beverage is within the numerical range described above, the effect of the present invention is more likely to be obtained.

The value of the pH of the beverage is a value measured using a pH meter, under the conditions of a pressure of 1 atm and a product temperature of 20°C.

### (Polysaccharide)

Examples of the polysaccharide to be used in the beverage according to the present invention include soybean polysaccharide and pectin. In particular, soybean polysaccharide is preferred, because it makes it easier to keep the volume average particle size of the acetic acid bacteria small without imparting viscosity to the beverage. Soybean polysaccharide and pectin are not particularly limited, and it is possible to use conventionally known products. Further, it is also possible to use commercially available products of soybean polysaccharide and pectin.

The amount of the polysaccharide incorporated into the beverage is preferably 0.001% by mass or more and 2.0% by mass or less, more preferably 0.005% by mass or more and 1.5% by mass or less, and still more preferably 0.01% by mass or more and 1.0% by mass or less, with respect to the total amount of the beverage. When the content of the polysaccharide is within the numerical range described above, it is possible to keep the volume average particle size of the acetic acid bacterial cells small without imparting viscosity to the beverage.

### (Acetic Acid Bacteria)

The acetic acid bacteria to be used in the beverage according to the present invention is not particularly limited, and it is possible to use conventionally known acetic acid bacteria. Specific examples of acetic acid bacteria include bacteria belonging to the genus *Gluconacetobacter,* bacteria belonging to the genus *Acetobacter,* bacteria belonging to the genus *Komagataeibacter,* and bacteria belonging to the genus *Gluconobacter.* Of these, it is preferred to use at least one type of acetic acid bacteria selected from the group consisting of bacteria belonging to the genus *Gluconacetobacter,* bacteria belonging to the genus *Acetobacter,* and bacteria belonging to the genus *Komagataeibacter.*

Examples of the acetic acid bacteria belonging to the genus *Gluconacetobacter* include *Gluconacetobacter swingsii, Gluconacetobacter xylinus, Gluconacetobacter diazotrophicus, Gluconacetobacter intermedius Gluconacetobacter sacchari, Gluconacetobacter maltaceti, Gluconacetobacter kombuchae,* and *Gluconacetobacter liquefaciens.*

Examples of the acetic acid bacteria belonging to the genus *Acetobacter* include *Acetobacter polyoxogenes, Acetobacter tropicalis, Acetobacter indonesiensis, Acetobacter syzygii, Acetobacter cibinongensis, Acetobacter orientalis, Acetobacter pasteurianus, Acetobacter orleanensis, Acetobacter lovaniensis, Acetobacter aceti, Acetobacter pomorum,* and *Acetobacter malorum.*

Examples of the acetic acid bacteria belonging to the genus *Komagataeibacter* include *Komagataeibacter hansenii, Komagataeibacter xylinus, Komagataeibacter europaeus,* and *Komagataeibacter oboediens.*

Examples of the acetic acid bacteria belonging to the genus *Gluconobacte* include *Gluconobacter frateurii,* and *Gluconobacter cerinus.*

### (Form of Acetic Acid Bacteria)

In the present invention, acetic acid bacteria are subjected to a drying treatment before being incorporated into the beverage. The volume average particle size of the acetic acid bacteria contained in the beverage according to the present invention can be adjusted to 0.1 µm or more and less than 0.5 µm, by subjecting the acetic acid bacteria to a homogenization treatment such as one using a high-pressure homogenizer in the beverage, in combination; this is because the acetic acid bacteria do not restore the particle size of the original acetic acid bacteria even when the bacteria absorbs the water in the beverage.

The acetic acid bacteria may be either in a state of live bacteria or in a state of dead bacteria. However, the acetic acid bacteria are preferably in a state of dead bacteria, because the particle size can be more easily adjusted.

### (Volume Average Particle Size of Acetic Acid Bacteria)

The volume average particle size of the acetic acid bacteria in the beverage is 0.1 µm or more and less than 0.50 µm, preferably 0.15 µm or more and 0.48 µm or less, more preferably 0.2 µm or more and 0.46 µm or less, and still more preferably 0.25 µm or more and 0.42 µm or less. The volume average particle size of acetic acid bacteria in a conventional vinegar is usually from about 1 to 2 µm. However, the surface area of the bacteria increases by decreasing the particle size within the range described above, and as a result, flavor-related components are absorbed onto the surface of the acetic acid bacteria. It is assumed that this causes an increase in the flavor-lasting ability in the mouth.

The volume average particle size of the acetic acid bacteria in the beverage can be measured by the following method.

First, the beverage is diluted 10-fold with pure water, to prepare a measurement sample. Subsequently, the measurement sample is subjected to a measurement using a dynamic light scattering particle size distribution analyzer at a product temperature of 25°C, and the value obtained three minutes later as a result of the measurement was defined as the volume average particle size of the acetic acid bacteria.

The amount of the dried acetic acid bacteria incorporated into the beverage is preferably 0.001% by mass or more and 1% by mass or less, more preferably 0.001% by mass or more and 0.1% by mass or less, and still more preferably 0.006% by mass or more and 0.05% by mass or less, with respect to the total amount of the beverage. When the amount of the dried acetic acid bacteria incorporated into the beverage is within the numerical range described above, it is possible to improve the effect of allowing the fruit flavor to last in the mouth.

### (Vinegar)

The vinegar to be used in the beverage according to the present invention is a vinegar containing water and acetic acid as main components. Examples of the vinegar in the present invention include vinegars listed in the "Food Labeling Standards" defined by the Consumer Affairs Agency, and also include sour seasonings similar to those vinegars. More specific examples of the vinegar include: those obtained by the acetic acid fermentation of foods such as, for example, cereal grains such as rice, malt and sake lees, or processed products thereof; fruits such as grapes and apples; vegetables such as onions, carrots and tomatoes; other agricultural products; and alcohols; those obtained by separately adding acetic acid to any of the above; and those obtained by mixing any of these. Examples also include those obtained by adding a saccharide, an organic acid, an amino acid, salt and/or the like to any of the above. Examples of such vinegars include black vinegars, rice vinegars, five-grain vinegars, wine vinegars, fruit vinegars, tomato vinegars, moromi (sake mash) vinegars and plum vinegars. Of these, the vinegar is preferably a black vinegar, a fruit vinegar or the like. These vinegars may be used singly, or in combination of two or more kinds thereof.

The acidity of acetic acid in the beverage is preferably 0.05% by mass or more and 1% by mass or less, more preferably 0.1% by mass or more and 0.8% by mass or less, and still more preferably 0.15% by mass or more and 0.5% by mass or less. When the acidity of acetic acid is within the numerical range described above, it is possible to obtain a beverage with a refreshing taste.

### (Other Raw Material)

The beverage according to the present invention may contain another raw material, to the extent that the effect of the present invention is not impaired. As the other raw material, any of various types of raw materials usually used in food applications can be selected and incorporated, as appropriate. Examples of the other raw material include: water; sweeteners such as sugar, powdered sugar saccharide, granulated sugar, fructose-glucose syrup, glucose-fructose syrup, fructose, starch syrup, honey, sucralose, trehalose, stevia, aspartame and phenylalanine; seasonings such as fruit juice, salt and soy sauce; acidic materials such as citric acid and lactic acid; vitamins such as vitamin A, vitamin Bs, vitamin C and vitamin D; amino acids such as taurine and alanine; and flavoring agents.

### < Method of Producing Beverage >

The method of producing a beverage having a viscosity at 25°C of 50 mPa·s or less, according to the present invention, includes: the following mixing step of mixing raw materials; and the following refining treatment step.

### (Mixing Step)

The mixing step is the step of mixing at least dried acetic acid bacteria and a polysaccharide to obtain a mixed liquid. In this step, a vinegar and any other raw material may be mixed, as appropriate. The method of mixing is not particularly limited, and the mixing can be carried out by a conventionally known method.

### (Refining Treatment Step)

The refining treatment step is the step of subjecting the mixed liquid obtained in the mixing step described above to a refining treatment, to adjust the volume average particle size of the acetic acid bacteria in the beverage within the range of 0.1 µm or more and less than 0.5 µm. A treatment using a high-pressure homogenizer is preferably used as the refining treatment. The conditions for carrying out the treatment using a high-pressure homogenizer are not particularly limited, as long as the volume average particle size of the acetic acid bacteria in the beverage can be adjusted within a desired range. However, the treatment is preferably carried out under a pressure of from 10 to 150 mPa.

### EXAMPLES

The present invention will be described below in further detail, with reference to Examples and Comparative Examples. However, the present invention is not construed as being limited to the content of the following Examples.

### < Preparation Example of Dried Acetic Acid Bacteria >

To a mixture of 4% of ethanol, 0.2% of yeast extract and 95.7% of fresh water, 0.1% of acetic acid bacteria *(Gluconacetobacter hansenii)* was added, and the bacteria were cultured for 24 hours under the conditions of a product temperature of 30°C and an air flow rate of 4 L/min. After subjecting the resulting acetic acid bacterial solution to a centrifugal concentration treatment, the culture medium was washed off several times with fresh water, to obtain a 10% acetic acid bacterial solution. Subsequently, the 10% acetic acid bacterial solution was subjected to a spray drying treatment at an inlet product temperature of 170°C and an outlet product temperature of 65°C, to prepare dried acetic acid bacteria (powder). The thus prepared dried acetic acid bacteria (powder) are in a state of dead bacteria.

Water was added to the thus obtained dried acetic acid bacteria to prepare a sample, and the volume average particle size of the acetic acid bacteria in the sample was measured three minutes later, using a dynamic light scattering particle size distribution analyzer (trade name: ZETASIZER NANO, manufactured by Malvern Panalytical Ltd.) at a product temperature of 25°C. As a result, the volume average particle size was 1 µm.

Further, the volume average particle size of the acetic acid bacteria in the 10% acetic acid bacterial solution described above was measured by the same method, and as a result, the volume average particle size of the acetic acid bacteria was 1 µm.

In addition, separately from the Preparation Example described above, another sample was prepared by subjecting the 10% acetic acid bacterial solution only to a high-pressure homogenizer treatment in the beverage, without performing a drying treatment. The volume average particle size of the sample was measured by the same method, and as a result, the volume average particle size of the acetic acid bacteria was 1 µm.

### < Production Example of Beverage >

### [Example 1]

A beverage was produced in accordance with the mixing ratio shown in Table 1. Specifically, a black vinegar, the dried acetic acid bacteria prepared as described above, soybean polysaccharide (trade name: SOYAFIBE-S-DN, manufactured by Fuji Oil Co., Ltd.), plum juice, glucose-fructose syrup, sucralose, citric acid and fresh water were introduced into a stirring tank, followed by mixing, to obtain a mixed liquid. Subsequently, the resulting mixed liquid was subjected to a refining treatment using a high-pressure homogenizer under the conditions of a pressure of 20 Mpa and 1 pass, to obtain a beverage.

### [Comparative Example 1]

A beverage was obtained in the same manner as in Example 1, except that the mixed liquid was prepared without adding soybean polysaccharide thereto, and that thereafter, the refining treatment using a high-pressure homogenizer was not performed.

### [Example 2]

A beverage was obtained in the same manner as in Example 1, except that the pressure of the high-pressure homogenizer was changed to 200 Mpa.

### [Example 3]

A beverage was obtained in the same manner as in Example 1, except that the amount of the dried acetic acid bacteria incorporated into the beverage was changed to 0.001% by mass.

### [Example 4]

A beverage was obtained in the same manner as in Example 1, except that the amount of the dried acetic acid bacteria incorporated into the beverage was changed to 0.05% by mass, and that the amount of the soybean polysaccharide incorporated into the beverage was changed to 1% by mass.

### [Example 5]

A beverage was obtained in the same manner as in Example 1, except that the amount of the dried acetic acid bacteria incorporated into the beverage was changed to 0.1% by mass, and that the amount of the soybean polysaccharide incorporated into the beverage was changed to 1% by mass.

### [Example 6]

A beverage was obtained in the same manner as in Example 1, except that the amount of the soybean polysaccharide incorporated into the beverage was changed to 0.0012% by mass.

### [Example 7]

A beverage was obtained in the same manner as in Example 1, except that the amount of the soybean polysaccharide incorporated into the beverage was changed to 0.006% by mass.

### [Example 8]

A beverage was obtained in the same manner as in Example 1, except that the amount of the soybean polysaccharide incorporated into the beverage was changed to 0.5% by mass.

### [Example 9]

A beverage was obtained in the same manner as in Example 1, except that the amount of the soybean polysaccharide incorporated into the beverage was changed to 1.5% by mass.

### [Example 10]

A beverage was obtained in the same manner as in Example 1, except that 0.1% by mass of pectin was added instead of the soybean polysaccharide.

### [Example 11]

A beverage was obtained in the same manner as in Example 1, except that 0.25% by mass of pectin was added instead of the soybean polysaccharide.

### [Example 12]

A beverage was obtained in the same manner as in Example 1, except that 0.5% by mass of pectin was added instead of the soybean polysaccharide.

### [Example 13]

An apple vinegar, acetic acid bacteria (dried powder), soybean polysaccharide (trade name: SOYAFIBE-S-DN, manufactured by Fuji Oil Co., Ltd.), apple juice, honey, fructose-glucose syrup, sucralose, citric acid and fresh water were introduced, in accordance with the mixing ratio shown in Table 3, followed by mixing, to obtain a mixed liquid. Subsequently, the resulting mixed liquid was subjected to the refining treatment in the same manner as in Example 1, to obtain a beverage.

### [Example 14]

A beverage was obtained in the same manner as in Example 13, except that the amount of the soybean polysaccharide incorporated into the beverage was changed to 0.5% by mass.

### [Example 15]

A beverage was obtained in the same manner as in Example 13, except that the amount of the soybean polysaccharide incorporated into the beverage was changed to 1% by mass.

### [Comparative Example 2]

A beverage was obtained in the same manner as in Example 13, except that the mixed liquid was prepared without adding soybean polysaccharide thereto, and that thereafter, the refining treatment using a high-pressure homogenizer was not performed.

### < Measurement of Volume Average Particle Size of Acetic Acid Bacteria in Beverage >

Each beverage prepared as described above was diluted 10-fold with pure water, to prepare a measurement sample. The volume average particle size of the acetic acid bacteria was measured for each measurement sample, using a dynamic light scattering particle size distribution analyzer (trade name: ZETASIZER NANO, manufactured by Malvern Panalytical Ltd.). The measured results are shown in Tables 1 to 3.

### < Measurement of Viscosity of Beverage >

The viscosity of each beverage prepared as described above was determined by performing measurement using a Type B viscosimeter under the conditions of a pressure of 1 atm, a product temperature of 25°C and a rotational speed of 60 rpm, with the use of an L-shaped adaptor, and calculating from the reading when the rotor had rotated for two minutes after the start of the measurement. The measured results are shown in Tables 1 to 3.

### < Measurement of pH of Beverage >

The pH of each beverage prepared as described above was measured using a pH meter (a desktop pH meter, F-72, manufactured by HORIBA, Ltd.) under the conditions of a pressure of 1 atm and a product temperature of 20°C. The measured results are shown in Tables 1 to 3.

### < Sensory Evaluation of Beverage >

A panel of a plurality of trained panelists tasted each beverage prepared as described above, and carried out the sensory evaluation of the fruit flavor of the beverage, in accordance with the following criteria. The evaluation results are shown in Tables 1 to 3. In the following evaluation criteria, values of "2" or more indicate good results.

### [Evaluation Criteria]

3: The fruit flavor of the beverage lasted for a long time in the mouth.
2: The fruit flavor of the beverage lasted somewhat longer in the mouth.
1: The fruit flavor of the beverage did not last in the mouth.

**[Table 1]**

| | Example 1 | Comparative Example 1 | Example 2 | Example 3 | Example 4 | Example 5 |
|---|---|---|---|---|---|---|
| Black vinegar | 4 | 4 | 4 | 4 | 4 | 4 |
| Dried acetic acid bacteria | 0.006 | 0.006 | 0.006 | 0.001 | 0.05 | 0.1 |
| Soybean polysaccharide | 0.1 | 0 | 0.1 | 0.1 | 1 | 1 |
| Plum juice | 1.5 | 1.5 | 1.5 | 1.5 | 1.5 | 1.5 |
| Glucose-fructose syrup | 1.7 | 1.7 | 1.7 | 1.7 | 1.7 | 1.7 |
| Sucralose | 0.001 | 0.001 | 0.001 | 0.001 | 0.001 | 0.001 |
| Citric acid | 0.08 | 0.08 | 0.08 | 0.08 | 0.08 | 0.08 |
| Plum Flavoring | 0.12 | 0.12 | 0.12 | 0.12 | 0.12 | 0.12 |
| Water | Balance | Balance | Balance | Balance | Balance | Balance |
| Total (% by mass) | 100 | 100 | 100 | 100 | 100 | 100 |
| Pressure in high-pressure homogenizer treatment (Mpa) | 20 | 0 | 200 | 20 | 20 | 20 |
| Volume average particle size of acetic acid bacteria (µm) | 0.32 | 0.99 | 0.28 | 0.23 | 0.40 | 0.44 |
| Viscosity (mPa·s) | 1.39 | 1.35 | 1.34 | 1.34 | 1.82 | 1.78 |
| pH | 2.93 | 2.7 | 2.93 | 2.92 | 3.08 | 3.06 |
| Sensory Evaluation | 3 | 1 | 2 | 3 | 3 | 3 |

When the fruit flavor was compared between the beverages of Example 1 and Example 3, the beverage of Example 1 showed a higher effect of the present invention, and thus was more preferred.

When the fruit flavor was compared between the beverages of Example 4 and Example 5, the beverage of Example 4 showed a higher effect of the present invention, and thus was more preferred.

**[Table 2]**

| | Example 6 | Example 7 | Example 8 | Example 9 | Example 10 | Example 11 | Example 12 |
|---|---|---|---|---|---|---|---|
| Black vinegar | 4 | 4 | 4 | 4 | 4 | 4 | 4 |
| Dried acetic acid bacteria | 0.006 | 0.006 | 0.006 | 0.006 | 0.006 | 0.006 | 0.006 |
| Soybean polysaccharid e | 0.0012 | 0.006 | 0.5 | 1.5 | 0 | 0 | 0 |
| Pectin | 0 | 0 | 0 | 0 | 0.1 | 0.25 | 0.5 |
| Plum juice | 1.5 | 1.5 | 1.5 | 1.5 | 1.5 | 1.5 | 1.5 |
| Glucose-fructose syrup | 1.7 | 1.7 | 1.7 | 1.7 | 1.7 | 1.7 | 1.7 |
| Sucralose | 0.001 | 0.001 | 0.001 | 0.001 | 0.001 | 0.001 | 0.001 |
| Plum Flavoring | 0.12 | 0.12 | 0.12 | 0.12 | 0.12 | 0.12 | 0.12 |
| Citric acid | 0.08 | 0.08 | 0.08 | 0.08 | 0.08 | 0.08 | 0.08 |
| Water | Balance | Balance | Balance | Balance | Balance | Balance | Balance |
| Total (% by mass) | 100 | 100 | 100 | 100 | 100 | 100 | 100 |
| Pressure in high-pressure homogenizer treatment (Mpa) | 20 | 20 | 20 | 20 | 20 | 20 | 20 |
| Volume average particle size of acetic acid bacteria (µm) | 0.49 | 0.34 | 0.21 | 0.19 | 0.48 | 0.49 | 0.49 |
| Viscosity (mPa·s) | 1.3 | 1.31 | 1.5 | 2.06 | 1.74 | 2.65 | 5.17 |
| pH | 2.84 | 2.83 | 2.94 | 3.15 | 2.85 | 2.86 | 2.86 |
| Sensory Evaluation | 3 | 3 | 3 | 3 | 3 | 3 | 3 |

**[Table 3]**

| | Example 13 | Example 14 | Example 15 | Comparativ e Example 2 |
|---|---|---|---|---|
| Apple Vinegar | 4.5 | 4.5 | 4.5 | 4.5 |
| Dried acetic acid bacteria | 0.006 | 0.006 | 0.006 | 0.006 |
| Soybean polysaccharide | 0.1 | 0.5 | 1 | 0 |
| Apple juice | 3.2 | 3.2 | 3.2 | 3.2 |
| Honey | 0.8 | 0.8 | 0.8 | 0.8 |
| Glucose-fructose syrup | 0.6 | 0.6 | 0.6 | 0.6 |
| Sucralose | 0.0008 | 0.0008 | 0.0008 | 0.0008 |
| Citric acid | 0.08 | 0.08 | 0.08 | 0.08 |
| Apple flavoring | 0.15 | 0.15 | 0.15 | 0.15 |
| Water | Balance | Balance | Balance | Balance |
| Total (% by mass) | 100 | 100 | 100 | 100 |
| Pressure in high-pressure homogenizer treatment (Mpa) | 20 | 20 | 20 | 0 |
| Volume average particle size of acetic acid bacteria (µm) | 0.46 | 0.29 | 0.22 | 0.82 |
| Viscosity (mPa·s) | 1.26 | 1.52 | 1.83 | 1.31 |
| pH | 3.35 | 3.47 | 3.63 | 3.28 |
| Sensory Evaluation | 3 | 3 | 3 | 1 |

## Claims

1. A beverage comprising at least a polysaccharide and dried acetic acid bacteria, and having a viscosity at 25°C of 50 mPa·s or less,
wherein the acetic acid bacteria in the beverage have a volume average particle size of 0.10 µm or more and less than 0.50 µm.

2. The beverage according to claim 1, wherein the polysaccharide is at least one selected from the group consisting of soybean polysaccharide and pectin.

3. The beverage according to claim 1, wherein the polysaccharide is soybean polysaccharide.

4. The beverage according to any one of claims 1 to 3, wherein the beverage has a viscosity at 25°C of 0.1 mPa·s or more.

5. The beverage according to any one of claims 1 to 3, wherein the beverage has a viscosity at 25°C of 10 mPa·s or less.

6. The beverage according to any one of claims 1 to 3, wherein the amount of the dried acetic acid bacteria incorporated into the beverage is 0.001% by mass or more and 1% by mass or less, with respect to the total amount of the beverage.

7. The beverage according to any one of claims 1 to 3, wherein the beverage has a pH of 4.0 or less.

8. The beverage according to any one of claims 1 to 3, wherein the beverage further comprises a vinegar.

9. The beverage according to claim 8, wherein the acidity of acetic acid in the beverage is 0.05% by mass or more and 1% by mass or less.

10. The beverage according to any one of claims 1 to 3, wherein the beverage is a fruit-flavored beverage.

11. A method of producing a beverage having a viscosity at 25°C of 50 mPa·s or less, the method comprising the steps of:
mixing at least dried acetic acid bacteria and a polysaccharide to obtain a mixed liquid; and
subjecting the mixed liquid obtained in the mixing step to a refining treatment;
wherein the acetic acid bacteria in the beverage have a volume average particle size of 0.1 µm or more and less than 0.5 µm.

12. The method of producing a beverage according to claim 11, wherein the polysaccharide is soybean polysaccharide.

13. The method of producing a beverage according to claim 11 or 12, wherein the beverage has a viscosity at 25°C of 0.1 mPa·s or more.

14. The method of producing a beverage according to claim 11 or 12, wherein the beverage has a viscosity at 25°C of 10 mPa·s or less.

15. The method of producing a beverage according to claim 11 or 12, wherein the amount of the dried acetic acid bacteria incorporated into the beverage is 0.001% by mass or more and 1% by mass or less, with respect to the total amount of the beverage.
